# EUROPEAN PATENT SPECIFICATION

(11) **EP 1 286 486 B1**
(45) Date of publication and mention of the grant of the patent: **24.11.2004**
(21) Application number: 01402200.8
(22) Date of filing: 20.08.2001
(51) Int. Cl.: H04J 3/16

(54) **Method to share upstream bandwidth in a time division multiple access system, related network terminator and access system.**
Verfahren zur Zuteilung von Aufwärtsbandbreite in einem System mit Zeit-Mehrfachzugriff, zugehörender Netzwerkabschluss und Zugangssystem
Procédé pour partager la bande passante montant dans un systèm à accès multiple à division dans le temp, terminaison de rèsau et systèm d'accès associé

(43) Date of publication of application: 26.02.2003
(73) Proprietor: ALCATEL, 75008 Paris (FR)
(72) Inventor: Fredricx, Francois Pierre Constant, 9000 Gent (BE); Gyselings, Tim, 2100 Deurne (BE); Ringoot, Edwin Augustus Philomena, 4564 CW St. Jansteen (BE); Janssens, Nico Alfred Anna, 9290 Overmere (BE)
(74) Representative: Narmon, Gisèle Marie Thérèse

(56) References cited:
- EP-A- 0 854 659
- EP-A- 1 111 958

## Description

The present invention relates to a method to share upstream bandwidth in a time division multiple access system as specified in the non-characteristic part of claim 1, and to a related network terminator as specified in the non-characteristic part of claim 9 and to a time division multiple access system according to the non-characteristic part of claim 10.

Such a method and the related network and network terminator is already known in the art, e.g. from the *"published European Patent Application with application number EP 99403274.6 and filing date 23.12.1999 and that is published on 27.06.2001*, with publication number EP 1 111 958".

Therein, a method to divide upstream timeslots in a multiple access system that couples a line terminator via a tree-like network to a plurality of network terminators and that distributes downstream data packets by the line terminator to a plurality of network terminators is described.

Upon reception by a network terminator of a grant from the line terminator and upon recognition of the grant as being associated to this network terminator, the network terminator is permitted to transmit an upstream data packet in an upstream timeslot.

Furthermore, it has to be explained that common known upstream interfaces comprises in its upstream transmitted data-packets an overhead in front of a payload. This overhead is linked to the inherent burst-mode character of a time division multiple access system. The upstream transmission is based on the Time Division Multiple Access, meaning that each network terminator can only send data during a series of assigned timeslots out of all possible predefined timeslots. At each timeslot that a network terminator is allowed to send, the front-ends of the transmitter of the network terminator and of the receiver of the line terminator need some time i.e. an amount of bits in order to prepare themselves to correctly send, respectively, receive the burst of information contained in the timeslot. The required time depends on the physical limitations of the implementation of the front-ends such as of the optical front-ends in the event of an optical network with optical network terminators and an optical line terminator.

Similar time division multiple access methods and related network terminators and line terminators are also known and described in the *"ITU-T Recommendation G.983.1.* The systems described in this recommendation are more specifically 155/155Mbit/sec and 622(downstream)/155Mbit/sec systems wherein upon detection of its identity in a received downstream grant, a network terminator can use a 155Mbit/s upstream timeslot to send upstream an upstream data packet.

In this G.983.1 *Recommendation,* more particular at paragraph 8.3.4 and paragraph 8.3.5 the upstream interface and the transport specific TC functions is described. Herein, it is indeed described that the upstream interface comprises the presence of overhead bytes that are added in front of each upstream ATM cell. An upstream timeslot comprises 56 bytes i.e. 3 overhead bytes in front of 53 payload bytes i.e. an ATM cell. *In Table 6*/*G.983.1 the overhead bytes* are described. This table describes a guard time, a preamble and a delimiter. The guard time is defined in order to provide enough distance between two consecutive cells to avoid collisions. The preamble is defined in order to enable a line terminator, upon reception of an upstream data packet, to extract the phase of the arriving cell relative to the local timing of the line terminator and / or to acquire bit synchronization and amplitude recovery. The delimiter is defined as a unique pattern that indicates the start of the ATM cell that can be used to perform byte synchronization.

Furthermore, in order to support higher rates upstream, the *above mentioned application* uses an improved method to distribute, in the downstream direction, grants i.e. permits to use a predefined upstream timeslot at predefined time-moment. By adequately subdividing the existing upstream timeslots in sub-slots, higher rates can be supported whilst still being able to support the lower order network terminators.

Indeed, it is therein described by means of an example, that in case of a combination of a 622/155 Mbit/sec and a 622/622 Mbit/sec system, the network terminators sending at the former speed will upon receipt of a certain grant use the complete 155 Mbit/sec upstream frame, whilst in the latter system, the network terminators, upon receipt of its grant, will use a sub-frame being 1/4 th of the 155 Mbit/sec one.

In order to re-use the terminology of the above mentioned application the following definitions are repeated in the following paragraph and will be used in the further application:
- network terminators transmitting at higher speed, e.g. 622 Mbit/sec are called higher order network terminators and network terminators sending at the known lower upstream speed, e.g. 155 Mbit/sec, are called lower order network terminators.
- upstream frames used by lower order network terminators are called lower order timeslots or shortly timeslot, whilst slots used by a higher order network terminator are called higher order timeslots, these slots are in fact sub-slots in the upstream timeslot that has however the same size as a lower order timeslot.

The upstream transmission of a data packet that comprises an overhead and its payload, at a higher transmission rate, in such a sub-slot of a timeslot has the following drawback.

Indeed, a disadvantage of the above described method to share upstream bandwidth is that in the event of an upgrade of a network terminator towards a higher upstream transmission rate with e.g. a bitrate that increases above 155 Mbps, the upstream overhead such as the above described 3 bytes, becomes too short for guard time and transmitter settings and receiver settings and indication of the start of the payload. Indeed, the duration of the upstream overhead bytes decreases with increasing bitrate. Within this shortened period of time it gets very complicated to have a sufficient guard time, to set all transmitter settings, to set all receiver settings and to indicate the start of the payload.

By transmitting data-packets that include overhead and payload in such a sub-slot, the one after the other, by different higher order network terminators, at such a higher transmission bitrate, the time spent on the upstream overhead bytes will decrease. As a result of that the guard time, the transmitter and receiver settings and the indication of the payload have also to be executed in a shorter time.

An object of the present invention is to provide a method to share upstream bandwidth in a time division multiple access system and to provide a related network terminator and related time division multiple access system of the above known type but which would allow a further upgrade of the existing systems to higher upstream speeds without having the above mentioned problems.

According to the invention, this object is achieved by means of a method, a network terminator and a time division multiple access system according to claim 1, 9 and 10 respectively.

Indeed in the event of a higher order network terminator, by transmitting the payload, in the upstream timeslot only after a predefined time period after a start of the upstream timeslot and by defining this time period substantially equal to a time-period needed to transmit a lower order overhead by a lower order network terminator, the method provides enough time to transmit, in the event when it would be required, a bigger overhead that would be sufficiently large to perform its functionality. A lower order overhead comprises the overhead of a data packet as defined for a lower order network terminator.

Such a bigger overhead, that would be transmitted by this higher order network terminator at this higher bit-rate, could comprise more bits, as explained above, according to a definition of the content of this bigger overhead and would allow to realize the required functions such as the guard time, preamble and delimiter.

In this way, an upgrade of a time division multiple access system to higher upstream bit rates is allowed while maintaining acceptable requirements for the front-ends of the network units and the line terminators and an acceptable bandwidth efficiency.

A further advantage of such a method to share upstream bandwidth according to the present application is that a specific sub-slot assignment, such as in the application mentioned in the introduction, would not be necessary anymore. A whole upstream timeslot is assigned to one network terminator, even when it is a higher order network terminator, according to the known bandwidth allocation principles of the initial lower order time division multiple access system such as e.g. defined in G.983.1 Recommendation.

The only required adaptation in the event of an upgrade towards a higher order network terminator is that its transmitter is only allowed to transmit the payload of the data packet in the assigned upstream timeslot after the predefined time period of a start of the timeslot. This is described in claim 9. Furthermore, in the event of an upgrade towards bit-rates whereby a bigger overhead is required, the network terminator must be adapted to generate this bigger overhead. This overhead can be transmitted, even although it is bigger, in front of the payload, since a time-period, that is substantially equal to a time period needed to transmit a lower order overhead by a lower order network terminator, is available before the payload has to be started to be transmitted.

As it became clear from the foregoing, the overhead of the data-packet is transmitted during the predefined time period. This is described in claim 2. Indeed, when adopting higher upstream bit rates than 155.52 Mbps, the additional strain on the physical layer performances, as an example on the optical front ends of a transmitter of an optical network terminator and of the receiver of the optical line terminator can be softened or even avoided by grouping a predefined number of upstream lower overhead bytes at the start of the upstream timeslot. The bit content of these grouped upstream overhead bytes can be optimized at will. This will allow for a predefined number of times longer duration for the whole of the different functionality's of the physical layer, such as the guard time i.e. empty margin for turn-on delay of the optical network terminator laser, the clock phase alignment at the optical burst-mode receiver, the delimiter i.e. defining the start of the payload inside the upstream timeslot. This is important as the minimal guard time is constrained by physical effects of semiconductor laser diodes, and as the clock phase alignment procedure becomes more technically delicate as the bit rate increases.

When the lower order overhead comprises a first predefined number of bytes it would be convenient to define a bigger overhead as at least twice e.g. N number of times the first predefined number of overhead bytes. This allows an easier implementation of a transformation of a lower order network terminator towards a higher order network terminator. This is described in claim 3.

A lower order payload comprises the payload of a data packet as defined for a lower order network terminator.

It has to be explained that the proportion of the duration of the upstream overhead bytes to the payload duration inside an upstream timeslot determines the upstream bandwidth efficiency. When this proportion is large, a lot of upstream bandwidth is wasted to the upstream overhead bytes, which do not carry any useful information for the data layer. When the chosen duration of the upstream overhead bytes is large compared to the predefined payload entity duration, the bandwidth efficiency would decrease. In order to counteract this negative impact on the efficiency, a number of lower order payload entities could be concatenated together in the payload of the upstream timeslot, after the upstream overhead bytes of that timeslot, which then becomes common for a concatenated payload. This restores the proportion of the duration of the upstream overhead bytes to the payload duration inside the upstream timeslot. So, when for a lower order payload a second predefined number of payload bytes is defined it is more bandwidth efficient to comprise in the payload of the data-packet transmitted by the higher order network terminator, at least once e.g. M number of times this second predefined number of payload bytes. This is described in claim 4.

A particular case is obtained when the at least twice e.g. N times the first predefined number of payload bytes is equalized to the at least once e.g. M times the second predefined number of overhead bytes. N overhead entities are grouped and in parallel the same amount M payload entities are grouped together inside the upstream timeslot. This is described in claim 5. According to this preferred implementation and with a careful choice for N=M, the upstream timeslot can just be fully used as it is.

Claim 6 describes an upgrade of the network towards all higher order network terminators without any lower order network terminator. Although that the upstream timeslots are still as long as the formerly lower order timeslots, and although that the same frame structure as the lower order frame structure might be kept irrespective of the actual bit-rate of the line terminator and network terminator and although that the bandwidth allocation principles of the lower order network can be kept for this higher transmission bit-rates, no transmission at the formerly lower order transmission rate is done anymore.

A particular implementation is described when the predefined number of payload bytes is an Asynchronous Transfer Mode cell. This is described in claim 7.

A further implementation is described when the predefined number of payload bytes comprises at least one Ethernet packet. This is described in claim 8. It has to be explained here that in the event of Ethernet packet, the lower order upstream timeslots do not have a fixed length due to a variable length for the payload bytes. However, the time-period needed to transmit a lower order overhead of a lower order Time Division Multiplex Access System comprising Ethernet packets, is predefined and is constant. This enables application of the main principle of the present application, which is transmitting the payload by a higher order network terminator only after this predefined time period.

It is to be noticed that the term 'comprising', used in the claims, should not be interpreted as being limitative to the means listed thereafter. Thus, the scope of the expression 'a device comprising means A and B' should not be limited to devices consisting only of components A and B. It means that with respect to the present invention, the only relevant components of the device are A and B.

Similarly, it is to be noticed that the term 'coupled', also used in the claims, should not be interpreted as being limitative to direct connections only. Thus, the scope of the expression 'a device A coupled to a device B' should not be limited to devices or systems wherein an output of device A is directly connected to an input of device B. It means that there exists a path between an output of A and an input of B which may be a path including other devices or means.

The above and other objects and features of the invention will become more apparent and the invention itself will be best understood by referring to the following description of an embodiment taken in conjunction with the accompanying drawings wherein:

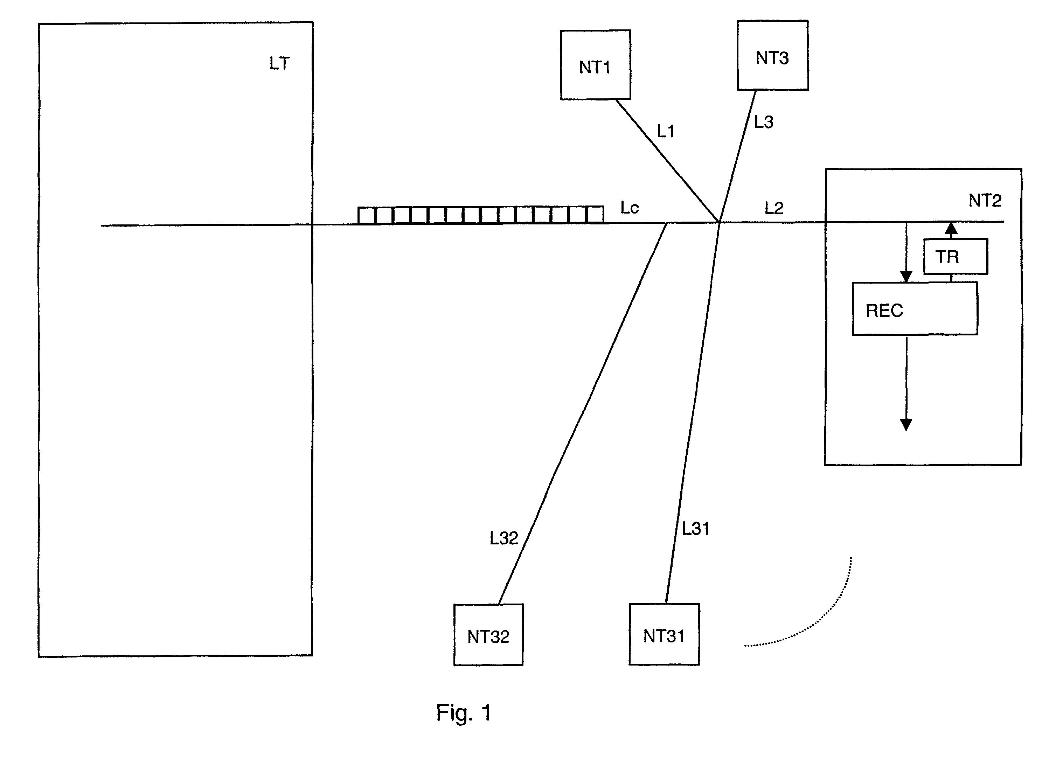

Fig. 1 shows a block scheme of an embodiment of a time division multiple access network wherein the method of the invention is used; and
Fig 2 shows an upstream timeslot format used by a time division multiple access network according to the prior art; and
Fig. 3 and Fig. 4 shows an upstream timeslot format used by a time division multiple access network according to the present application.

The time division multiple access network includes a line terminator LT and a plurality of network terminators NT1, NT2, NT3, ..., NT31, NT32. The line terminator LT is coupled to each network terminator NT1, NT2, NT3, ..., NT31, NT32 via the cascade connection of a common transmission link Lc and an individual user link L1, L2, L3, ..., L31, L32.

The time division multiple access network is an optical network transporting for instance asynchronous transfer mode ATM cells over optical fibers from the line terminator LT to the network terminators NT1, NT2, NT3, ..., NT31, NT32. The time division multiple access network broadcasts network terminator identities or grants in downstream information packets from the line terminator LT to the plurality of network terminators NT1, NT2, NT3, ..., NT31, NT32. Upon detection of its own identity a network terminator is allowed to transfer a predetermined amount of upstream information packets in predetermined upstream timeslots to the line terminator LT. For example : upon detection of network terminator NT3 of its own identity, network terminator NT3 is allowed to send to the line terminator upstream information packets in predetermined timeslots.

Each network terminator, whereof only network terminator NT2 is shown in detail in order not to overload the figure, includes a receiver REC and a transmitter TR.

The line terminator allocates the time slots in a flexible and dynamic way. Indeed the upstream transfer capacity of the time division multiple access network is shared amongst the network terminators NT1, NT2, NT3, ..., NT31, NT32 based on their needed and requested upstream bandwidth to transmit upstream information. This needed upstream bandwidth is requested by the network terminators NT1, NT2, NT3, ..., NT31, NT32 to the line terminator LT. The requested bandwidth is translated by the line terminator LT in a predetermined number of allocated timeslots. This is realized by creating according the requested bandwidth of the network terminators NT1, NT2, NT3, ..., NT31, NT32 a stream of grants which correspond to the grants as specified in ITU-T Recommendation G.983.1. It has to be remarked that the detailed working of this allocation goes beyond the scope of this invention and is therefore not described. A detailed description of this working can be found in the published European patent application with publication number 0 544 975. The aim is the use of the grants to inform the network terminators NT1, NT2, NT3, ..., NT31, NT32 of the allocated timeslots. Following this embodiment the stream of grants is provided to the receiver REC of each network terminator.

Since the way in which the number and sequence of allocated grants is determined is outside of the scope of the current invention, this is not explained in detail. Examples of how this is done can be found in the earlier mentioned patent application and in EPA 0854659.

The receiver REC in each network terminator terminators NT1, NT2, NT3, ..., NT31, NT32 (only shown for NT2) is included to receive a grant from the line terminator LT within the downstream information; and the transmitter TR which is coupled to this receiver, is included to transmit, upon recognition by the network terminator of its grant as being associated to itself, an upstream data packet in an upstream timeslot. The upstream data packet comprises an overhead in front of a payload.

In order to explain the subject method, it is supposed that network terminator NT2 is a higher order network terminator, e.g. a network terminator transmitting at 1.24416 Gigabit/sec.

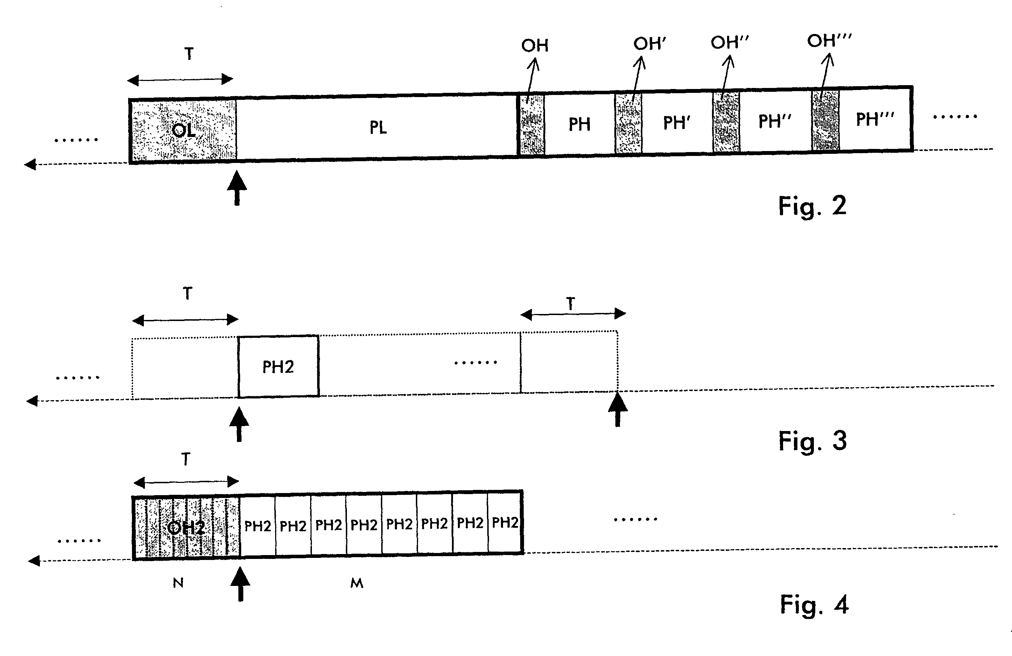

Referring to figure 2 the upstream frame format used by the time division multiple according to the prior art is shown. As it can be seen on figure 2, in an upstream time slot, assigned to a lower order network terminator, the data packet comprises a lower order overhead OL in front of a lower order payload PL. In the event when a subslot in a higher order timeslot is assigned to a higher order network terminator e.g. NTa, NTb, NTc or NTd (not shown on the Figure) each sub-slot comprises a higher order overhead OH, OH', OH" and OH''' in front of, respectively, a higher order payload PO, PO', PO"and PO"'. A concatenation of a number of sub-slots filled with a higher order overhead in front of its higher order payload, fills exactly one upstream timeslot.

Taking as example the downstream frame of Fig. 2, a network terminator first recognizes its identity in a grant location and being a lower order network terminator, it then transfers an information packet in a 155 Mbit/sec timeslot. The subsequent identity transferred by the line terminator is that of a higher order network terminator. Upon detection of its own identity and knowing that it is an higher order network terminator, this network terminator is allowed to transfer an upstream information packet in a sub-slot of an 155 Mbit/sec slot being 1/4^{th} thereof. In order not to have gaps in the upstream frames, the line terminator has included a subsequent grant for this or another higher order network terminator. Upon detection of its identity, the higher order network terminator sends an upstream information packet in a subsequent subslot as shown in Fig. 2. In this way, the higher order network terminator is enabled to send upstream information packets at 322 Mbit/s, whilst the lower order network terminator sends at 155 Mbit/s, and only one frame format is used which is suited for both speeds.

However, as explained above, when adopting higher upstream bit rates than 155.52 Mbps an additional strain on the physical layer performances and e.g. more in particular on the optical front ends of optical network unit transmitters and of the optical line terminator receiver occurs.

Referring to Figure 3, it is shown that this can be avoided by applying the main principle of the present application. Indeed, in the event when the network terminator NT2 is a higher order network terminator, the transmitter is further comprised to transmit the payload PH2 in the upstream timeslot after a predefined time period T of a start of the upstream timeslot. Hereby the predefined time period T is defined as being substantially equal to a time-period needed to transmit a lower order overhead OL by a lower order network terminator. In the event of higher bit-rates and the requirement of a bigger overhead, enough time is available during T to transmit this higher order overhead i.e. overhead being transmitted at a higher transmission rate.

An advantage of the present allocation over the cited application in the introductory part is that the bandwidth allocation principles can be kept. Indeed, in the application of the introductory part, the location of the grants in the downstream PLOAM cells had to be extended. This is not required for this present application, since the assignment of an upstream timeslot can be kept according to a one-to-one relation.

Referring to Figure 4, an more efficient implementation of the present application is shown. Presume that the network terminator NT2 is enabled to transmit at a transmission rate that is 4 times higher as the initial lower transmission rate and that it is preferred due to the physical constraints to comprise in the overhead OH2 that is transmitted by the higher order network terminator NT2, N times the predefined number of overhead bytes that was defined for the lower order overhead i.e. 3 bytes. As an example and as it is shown in Figure 4, N is chosen to be equal to 8 times. This means that the higher order overhead that is transmitted by the higher order network terminator NT2 in Figure 3 is N times x 3 bytes = 8 times x 3 bytes = 24 bytes long. Transmitting the defined 24 bytes higher order overhead at the higher order transmission rate fills exactly the available time period which was made available in front of the payload.

Furthermore, as it was explained in an above paragraph, in order to use the available bandwidth in a more efficient way i.e. payload versus overhead, a preferred implementation is that the payload PH2 that is transmitted by the higher order network terminator NT2 comprises at least once, i.e. a predefined M number of times the predefined number of payload bytes that was defined for the lower order payload i.e. one ATM cell which is 53 bytes long. As an example and as it is shown in figure 4, M is chosen to be equal to 8 times. Indeed, the most efficient implementation of the present application is the situation when N=M. Indeed, no upstream bandwidth gaps are available anymore and a higher order network terminator NT2 is enabled to use the available lower order upstream timeslots by using the available lower order frame structure and the available lower order bandwidth allocation principles.

It should be noted that although the above described network of the chosen embodiment is an asynchronous transfer mode ATM network in an optical time division multiple access network, the application of the present invention is not restricted to the field of ATM in a optical system. Small modifications, evident to a person skilled in the art may be applied to the above described embodiment to adapt it to a method to share upstream bandwidth that divides upstream timeslots but that is integrated in other time division multiple access networks wherein other type of data-packets with other types of overhead and payload packets are transmitted.

Furthermore it should be noted that although the above described embodiment provides an upgrade of a network terminator towards a bit-rate of 1.24416 Gigabit/sec, the present application is not limited to time division multiple access systems with only such higher order network terminators. Indeed, small modifications, evident to a person skilled in the art may be applied to the above described embodiment to adapt it to a method and related network terminators and associated line terminators that operates at other transmission bit-rates such as e.g. 2, 48832 Gigabit/sec (STM-16) or 9,95328 Gigabit/sec (STM-64).

As a further remark, it is obvious that the example of an amount of 32 connected network terminators is not a limitation to the present application.

A final remark is that, although the above-described embodiment provides a method that takes as reference a time-period that is needed to transmit a lower order overhead by a lower order network terminator which is equal to the transmission of 3 bytes at a 155,52 Mbit/sec transmission rate, the present application is not limited to a method to share upstream bandwidth in a time division multiple access system that only uses this particular lower order overhead and lower order transmission speed as reference. Indeed, small modifications, evident to a person skilled in the art might be applied to the above described method and terminators in order to use as reference a different time period that is needed to transmit another lower order overhead by a lower order network terminator in order to describe the implementation of an upgrade towards higher bit-rates.

While the principles of the invention have been described above in connection with specific apparatus, it is to be clearly understood that this description is made only by way of example and not as a limitation on the scope of the invention, as defined in the appended claims.

## Claims

1. A method to share upstream bandwidth in a time division multiple access system that couples a line terminator (LT) via a tree-like network to a plurality of network terminators (NT1, NT2, ..., NT31, NT32), said method comprising the steps of:
- upon reception of a grant by a network terminator (NT2) from said line terminator (LT) and upon recognition of said grant as being associated to said network terminator (NT2),
transmitting by said network terminator (NT2) an upstream data packet in an upstream timeslot and comprising in said data packet an overhead in front of a payload, **characterized in that**
in the event when said network terminator (NT2) is a higher order network terminator said method further comprises a step of transmitting said payload (PH2) in said upstream timeslot after a predefined time period (T) of a start of said upstream timeslot, and defining said predefined time period (T) substantially equal to a time-period needed to transmit a lower order overhead (OL) by a lower order network terminator.

2. The method according to claim 1, **characterized by** transmitting said overhead (OH2) by said higher order network terminator (NT2) during said predefined time period (T).

3. The method according to any previous claim, **characterized by** defining for said lower order overhead a first predefined number of overhead bytes and by comprising in said overhead (OH2) being transmitted by said higher order network terminator (NT2) at least twice (N) said predefined number of overhead bytes.

4. The method according to any previous claim, **characterized by** defining for a lower order payload a predefined number of payload bytes and by comprising in said payload (PH2) being transmitted by said higher order network terminator (NT2) at least once (M) said predefined number of payload bytes.

5. The method according to claim 3 and to claim 4, **characterized in that** said method further comprises, equalizing said at least once (M) said second predefined number of payload bytes to said at least twice (N) said first predefined number of overhead bytes.

6. The method according to any previous claim, **characterized in that** each one of said plurality of network terminators (NT1, NT2, ..., NT31, NT32) is a higher order network terminator.

7. The method according to claim 4 and to any previous claim, **characterized in that** said predefined number of payload bytes is an Asynchronous Transfer Mode cell.

8. The method according to claim 4 and to anyone of claim 1, claim 2, claim 3, Claim 5 and claim 6, **characterized in that** said predefined number of payload bytes comprises at least one Ethernet packet.

9. A higher order network terminator (NT2) for use in a time division multiple access system that couples a line terminator (LT) via a tree-like network to a plurality of network terminators (NT1, NT2, ..., NT31, NT32) including said network terminator (NT2), said network terminator (NT2) comprising :
- a receiver to receive a grant from said line terminator (LT); and
- a transmitter, being coupled to said receiver, to transmit, upon recognition of said grant as being associated to said network terminator (NT2), an upstream data packet in an upstream timeslot, said upstream data packet comprises an overhead in front of a payload, **characterized in that** said transmitter is further comprised to transmit said payload (PH2) in said upstream timeslot after a predefined time period (T) of a start of said upstream timeslot, said predefined time period (T) being substantially equal to a time-period needed to transmit a lower order overhead (OL) by a lower order network terminator.

10. A time division multiple access system that couples a line terminator (LT) via a tree-like network to a plurality of network terminators (NT1, NT2, ..., NT31, NT32), **characterized in that** said system comprises at least one network terminator (NT2) according to claim 9.

## Patentansprüche

1. Ein Verfahren zur Zuteilung von Aufwärtsbandbreite in einem Zeitmultiplexsystem mit Vielfachzugriff, das einen Leitungsabschluss (LT) über ein baumähnliches Netzwerk mit einer Vielzahl von Netzwerkabschlüssen (NT1, NT2, ..., NT31, NT32) koppelt, wobei das Verfahren folgende Schritte umfasst:
- Bei Empfang einer Genehmigung durch einen Netzwerkabschluss (NT2) vom Leitungsabschluss (LT) und bei Erkennung, dass die Genehmigung zu dem Netzwerkabschluss (NT2) gehört,
Senden eines Datenpaketes in Aufwärtsrichtung durch den Netzwerkabschluss (NT2) in einem Aufwärts-Zeitschlitz und Aufnahme einer Kopfinformation vor der Nutzinformation in das Datenpaket, **dadurch gekennzeichnet, dass**
für den Fall, dass der Netzwerkabschluss (NT2) ein Netzwerkabschluss höherer Ordnung ist, das Verfahren weiterhin einen Schritt umfasst, in dem die Nutzinformation (PH2) in dem Zeitschlitz in Aufwärtsrichtung nach einer vordefinierten Zeitdauer (T) nach dem Start des Zeitschlitzes in Aufwärtsrichtung gesendet wird, und die vordefinierte Zeitdauer (T) im Wesentlichen gleich der Zeitdauer ist, die dazu benötigt wird, eine Kopfinformation niedrigerer Ordnung (OL) durch einen Netzwerkabschluss niedrigerer Ordnung zu senden.

2. Das Verfahren gemäß Anspruch 1, **dadurch gekennzeichnet, dass** die Kopfinformation (OH2) durch den Netzwerkabschluss höherer Ordnung (NT2) während der vordefinierten Zeitdauer (T) gesendet wird.

3. Das Verfahren gemäß einem beliebigen der vorherigen Ansprüche, **dadurch gekennzeichnet, dass** für die Kopfinformation niedrigerer Ordnung eine erste vordefinierte Anzahl von Kopfinformations-Bytes definiert wird und dadurch, dass in der Kopfinformation (OH2), die von dem Netzwerkabschluss höherer Ordnung (NT2) übertragen wird, mindestens das Doppelte (N) der vordefinierten Anzahl von Kopfinformations-Bytes enthalten ist.

4. Das Verfahren gemäß einem beliebigen der vorherigen Ansprüche, **dadurch gekennzeichnet, dass** für eine Nutzinformation niedrigerer Ordnung eine vordefinierte Anzahl von Nutzinformations-Bytes definiert wird und dadurch, dass in der Nutzinformation (PH2), die von dem Netzwerkabschluss höherer Ordnung (NT2) übertragen wird, mindestens einmal (M) die vordefinierte Anzahl von Nutzinformations-Bytes enthalten ist.

5. Das Verfahren gemäß Anspruch 3 und Anspruch 4, **dadurch gekennzeichnet, dass** das Verfahren weiterhin die Gleichsetzung des mindestens Einmaligen (M) der zweiten vordefinierten Anzahl von Nutzinformations-Bytes mit dem mindestens Doppelten (N) der ersten vordefinierten Anzahl von Kopfinformations-Bytes umfasst.

6. Das Verfahren gemäß einem beliebigen der vorherigen Ansprüche, **dadurch gekennzeichnet, dass** jeder aus einer Vielzahl von Netzwerkabschlüssen (NT1, NT2, ..., NT31, NT32) ein Netzwerkabschluss höherer Ordnung ist.

7. Das Verfahren gemäß Anspruch 4 und jedem beliebigen der vorherigen Ansprüche, **dadurch gekennzeichnet, dass** die vordefinierte Anzahl von Nutzinformations-Bytes eine Asynchronous-Transfer-Mode-Zelle ist.

8. Das Verfahren gemäß Anspruch 4 und einem beliebigen aus Anspruch 1, Anspruch 2, Anspruch 3, Anspruch 5 und Anspruch 6, **dadurch gekennzeichnet, dass** die vordefinierte Anzahl von Nutzinformations-Bytes mindestens ein Ethernet-Paket enthält.

9. Ein Netzwerkabschluss höherer Ordnung (NT2) zur Verwendung in einem Zeitmultiplexsystem mit Vielfachzugriff, das einen Leitungsabschluss (LT) über ein baumähnliches Netzwerk mit einer Vielzahl von Netzwerkabschlüssen (NT1, NT2, ..., NT31, NT32) koppelt, die den Netzwerkabschluss (NT2) enthält, und wobei der Netzwerkabschluss (NT2) folgendes enthält:
- Einen Empfänger zum Empfang einer Genehmigung vom Leitungsabschluss (LT); und
- einen Sender, der an den Empfänger gekoppelt ist, um bei Erkennung, dass die Genehmigung zum Netzwerkabschluss (NT2) gehört, ein Datenpaket in Aufwärtsrichtung in einem Zeitschlitz in Aufwärtsrichtung zu senden, wobei das Datenpaket in Aufwärtsrichtung eine Kopfinformation vor der Nutzinformation enthält, **dadurch gekennzeichnet, dass** der Sender weiterhin vorhanden ist, um eine vordefinierte Zeit (T) nach dem Beginn des Zeitschlitzes in Aufwärtsrichtung die Nutzinformation (PH2) in dem Zeitschlitz in Aufwärtsrichtung zu senden, wobei die vordefinierte Zeit (T) im Wesentlichen gleich einer Zeitdauer ist, die dazu benötigt wird, eine Kopfinformation niedrigerer Ordnung (OL) durch einen Netzwerkabschluss niedrigerer Ordnung zu senden.

10. Ein Zeitmultiplexsystem mit Vielfachzugriff, das einen Leitungsabschluss (LT) über ein baumähnliches Netzwerk mit einer Vielzahl von Netzwerkabschlüssen (NT1, NT2, ..., NT31, NT32) koppelt, **dadurch gekennzeichnet, dass** das System mindestens einen Netzwerkabschluss (NT2) gemäß Anspruch 9 enthält.

## Revendications

1. Procédé pour partager un débit montant dans un système d'accès multiple par répartition dans le temps qui couple un terminateur de ligne (LT) par l'intermédiaire d'un réseau de type arbre à une pluralité de terminateurs de réseau (NT1, NT2..., NT31, NT32), ledit procédé comprenant les étapes consistant à :
lors de la réception d'une autorisation par un terminateur de réseau (NT2) provenant dudit terminateur de ligne (LT) et lors de la reconnaissance de ladite autorisation comme étant associée audit terminateur de réseau (NT2),
transmettre par ledit terminateur de réseau (NT2) un paquet de données amont dans un intervalle de temps amont et comprenant dans ledit paquet de données un surdébit face à une charge, **caractérisé en ce que**
dans le cas où ledit terminateur de réseau (NT2) est un terminateur de réseau d'ordre supérieur, ledit procédé comprend en outre une étape consistant à transmettre ladite charge (PH2) dans ledit intervalle amont après une durée prédéfinie (T) d'un démarrage dudit intervalle amont et définir ladite durée prédéfinie (T) sensiblement égale à une durée nécessaire pour transmettre un surdébit d'ordre inférieur (OL) par un terminateur de réseau d'ordre inférieur.

2. Procédé selon la revendication 1, **caractérisé par** la transmission dudit surdébit (OH2) par ledit terminateur de réseau d'ordre supérieur (NT2) pendant ladite durée prédéfinie (T).

3. Procédé selon l'une quelconque des revendications précédentes, **caractérisé par** la définition dudit surdébit d'ordre inférieur d'un premier nombre prédéfini d'octets de surdébit et en comprenant dans ledit surdébit (OH2) étant transmis par ledit terminateur de réseau d'ordre supérieur (NT2) au moins deux fois (N) ledit nombre prédéfini d'octets de surdébit.

4. Procédé selon l'une quelconque des revendications précédentes, **caractérisé par** la définition pour une charge d'ordre inférieur d'un nombre prédéfini d'octets de charge et en comprenant dans ladite charge (PH2) étant transmise par ledit terminateur de réseau d'ordre supérieur (NT2) au moins une fois (M) ledit nombre prédéfini d'octets de charge.

5. Procédé selon la revendication 3 ou la revendication 4, **caractérisé en ce que** ledit procédé comprenant en outre l'égalisation de ladite au moins une fois (M) ledit deuxième nombre prédéfini d'octets de charge auxdites au moins deux fois (N) ledit premier nombre prédéfini d'octets de surdébit.

6. Procédé selon l'une quelconque des revendications précédentes, **caractérisé en ce que** chacun de ladite pluralité de terminateurs de réseau (NT1, NT2..., NT31, NT32) est un terminateur de réseau d'ordre supérieur.

7. Procédé selon la revendication 4 et selon l'une quelconque des revendications précédentes, **caractérisé en ce que** ledit nombre prédéfini d'octets de charge est une cellule de mode de transfert asynchrone.

8. Procédé selon la revendication 4 et selon l'une quelconque de la revendication 1, la revendication 2, la revendication 3, la revendication 5 et la revendication 6, **caractérisé en ce que** ledit nombre prédéfini d'octets de charge comprend au moins un paquet Ethernet.

9. Terminateur de réseau d'ordre supérieur (NT2) destiné à être utilisé dans un système d'accès multiple par répartition dans le temps qui couple un terminateur de ligne (LT) par l'intermédiaire d'un réseau de type arbre vers une pluralité de terminateurs de réseau (NT1, NT2..., NT31, NT32) comprenant ledit terminateur de réseau (NT2), ledit terminateur de réseau (NT2) comprenant :
un récepteur destiné à recevoir une autorisation provenant dudit terminateur de ligne (LT) ; et
un émetteur, couplé audit récepteur, destiné à transmettre, lors de la reconnaissance de ladite autorisation comme étant associée audit terminateur de réseau (NT2), un paquet de données amont dans un intervalle de temps amont, ledit paquet de données amont comprend un surdébit face à une charge, **caractérisé en ce que** ledit émetteur est en outre compris pour transmettre ladite charge (PH2) dans ledit intervalle de temps amont après une durée prédéfinie (T) d'un démarrage dudit intervalle de temps amont, ladite durée prédéfinie (T) étant sensiblement égale à une durée nécessaire pour transmettre un surdébit d'ordre inférieur (OL) par un terminateur de réseau d'ordre inférieur.

10. Système d'accès multiple par répartition dans le temps qui couple un terminateur de ligne (LT) par l'intermédiaire d'un réseau de type arbre à une pluralité de terminateurs de réseau (NT1, NT2..., NT31, NT32), **caractérisé en ce que** ledit système comprend au moins un terminateur de réseau (NT2) selon la revendication 9.
